# EUROPÄISCHE PATENTSCHRIFT

(11) **EP 4 001 900 B1**
(45) Veröffentlichungstag und Bekanntmachung des Hinweises auf die Patenterteilung: **30.07.2025**
(21) Anmeldenummer: 21207774.7
(22) Anmeldetag: 11.11.2021
(51) Int. Cl.: G01N 21/64, G01N 21/77

(54) **BETRIEB EINES SENSORS**
OPERATION OF A SENSOR
FONCTIONNEMENT D'UN CAPTEUR

(30) Priorität: 11.11.2020 AT 603322020
(43) Veröffentlichungstag der Anmeldung: 25.05.2022
(73) Patentinhaber: Sieber, Arne, 8041 Graz (AT); Oxygen Scientific GmbH, 8041 Graz (AT)
(72) Erfinder: SIEBER, Arne, 8041 Graz (AT)
(74) Vertreter: Dilg, Haeusler, Schindelmann Patentanwaltsgesellschaft mbH

(56) Entgegenhaltungen:
- CN-B- 105 911 228
- GB-A- 2 479 183
- US-A1- 2003 235 513
- US-A1- 2012 192 623
- US-A1- 2016 021 434
- US-B2- 9 863 849
- FABIO RASTRELLO ET AL: "Thermal Conductivity Detector for Gas Chromatography: Very Wide Gain Range Acquisition System and Experimental Measurements", IEEE TRANSACTIONS ON INSTRUMENTATION AND MEASUREMENT, IEEE, USA, vol. 62, no. 5, 1 May 2013 (2013-05-01), pages 974 - 981, XP011498883, ISSN: 0018-9456, DOI: 10.1109/TIM.2012.2236723

## Beschreibung

Die vorliegende Erfindung betrifft ein Verfahren zum Betrieb eines Sensors, insbesondere eines optischen Gassensors zum Messen eines Analyten, einen Sensor, insbesondere einen optischen Gassensor, und eine Anordnung.

Galvanische Gassensoren haben üblicherweise einen analogen Spannungsausgang. Die Spannung beträgt dabei üblicherweise je nach galvanischem Sauerstoffsensor zwischen 10 mV bis 15 mV bei einem Sauerstoffpartialdruck von 0.21 bar.

Ein galvanischer Gassensor ist eine elektrochemische Zelle mit einer Kathode und einer Anode. Bei einem galvanischen Sauerstoffsensor, zum Beispiel, wird an der Kathode Sauerstoff umgesetzt und es fließt ein elektrischer Strom abhängig vom Sauerstoffpartialdruck. Der Strom wird mit einer kleinen Schaltung, welche üblicherweise auch eine Temperaturkompensation beinhaltet, in ein Spannungssignal umgewandelt. Auf der Schaltung ist meist ein 2-poliger Stecker montiert, an welchem ein Messgerät angeschlossen wird. Eine Batterie oder externe Versorgung ist für den Betrieb eines analogen galvanischen Sensors nicht notwendig. Galvanische Sauerstoffsensoren haben eine kurze Lebensdauer von einigen Monaten bis zu zwei Jahren und sind fehleranfällig. Trotzdem wird diese Art Sensoren am häufigsten eingesetzt.

Optische Gassensoren basieren auf einem anderen Messprinzip. Bei einem optischen Sauerstoffsensor werden spezielle Farbpigmente mit Licht einer speziellen Wellenlänge bestrahlt und beginnen zu fluoreszieren. Die Intensität oder auch die Abklingzeit der Fluoreszenz, nach Abschalten der Beleuchtung, ist vom Sauerstoffpartialdruck abhängig und wird ausgewertet. Üblicherweise wird mit einem Mikrocontroller der Sauerstoffpartialdruck berechnet und das Ergebnis digital über eine digitale Schnittstelle ausgegeben. Insofern ist ein optischer Sauerstoffsensor im Normalfall nicht kompatibel mit Geräten, welche für einen analogen galvanischen Sauerstoffsensor ausgelegt sind.

Um Kompatibilität von einem optischen Sensor zu einem galvanischen Sensor zu ermöglichen, kann ein Digital-zu-Analog-Konverter eingesetzt werden, der anstelle des digitalen Ausgangssignals ein analoges Signal äquivalent zu dem eines galvanischen Sensors ausgibt. Andererseits würde man in Geräteneuentwicklungen eine digitale Schnittstelle bevorzugen, da digitale Übertragungen üblicherweise robuster, störunanfälliger und kostengünstiger sind. Soll der Sensor in feuchten Umgebungen mit hoher Luftfeuchtigkeit und eventuell auch noch mit Salzgehalt betrieben werden, ist Korrosionsbeständigkeit notwendig. Bei galvanischen Sensoren sind die auftretenden Spannungen mit wenigen Millivolt sehr niedrig und somit ist das Risiko von Korrosion an den Kontakten des Anschlusses des Sensors recht gering. Dagegen sind Spannungspegel üblicher serieller Schnittstellen mit Spannungen über 1.5 V relativ hoch. Korrosion kann bei solchen Spannungen verstärkt auftreten. Eine Alternative sind Stromschnittstellen, wo das Spannungspotential niedrig gehalten wird und die digitale Information als unterschiedliche Stromlevels übertragen wird. Damit ist es möglich, das Risiko der Korrosion an den Kontakten zu minimieren.

Für den Betrieb eines optischen Gassensors ist eine Stromversorgung notwendig. Komponenten eines optischen Gassensors können neben einer Sensorschicht mit den Farbpigmenten eine Leuchtdiode (LED) mit einer LED Treiberschaltung, eine Photodiode mit Verstärker, einen Mikrocontroller, einen Analog-zu-Digital-Konverter, etc., sein. Für den Betrieb der Elektronik kann eine Stromversorgung vorgesehen werden. Der Stromverbrauch setzt sich dabei vor allem aus folgenden Komponenten zusammen, nämlich dem Stromverbrauch für analoge Teile der Schaltung und Verstärker, dem Stromverbrauch für den Betrieb der LED und des LED Treibers, und dem Stromverbrauch für den Betrieb des Mikrocontrollers.

Der Stromverbrauch für den Betrieb eines optischen Gassensors beträgt üblicherweise zwischen 7 mA und 150 mA.

Soll ein optischer Gassensor als direkter Ersatz für einen galvanischen Sensor ausgebildet sein, der ohne Modifikation eines bestehenden Gerätes anstelle eines analogen galvanischen Sensors genutzt werden kann, sollte zum einen der optische Gassensor mechanisch kompatibel sein und sollte zum anderen eine Stromversorgung vorzugsweise mit einer Batterie aufweisen, die idealerweise im Gehäuse des Sensors untergebracht ist.

Derzeit bekannte optische Gassensoren haben jedoch derart hohe Stromverbräuche, dass ein Betrieb mit einer integrierten Batterie nur für eine sehr kurze Zeitdauer möglich und somit nicht sinnvoll ist.

Patentschrift US 2012/192623 A1 offenbart ein Gaserfassungssystem, bei dem mehrere unterschiedliche Sensortypen mit einer einzigen Sendevorrichtung verwendbar sind und bei dem die mehreren unterschiedlichen Sensortypen mit reduzierter Benutzereingabe durch das System automatisch erkannt, justiert, kalibriert und überwacht werden können.

Es ist eine Aufgabe der Erfindung, einen Sensor, insbesondere einen optischen Gassensor, mit niedrigem Stromverbrauch bereitzustellen. Die Aufgabe wird mittels der unabhängigen Ansprüche gelöst. Weitere Ausführungsbeispiele sind in den abhängigen Ansprüchen gezeigt.

Gemäß der vorliegenden Erfindung ist ein Verfahren zum Betrieb eines Sensors, bevorzugt eines optischen Gassensors, zum Messen eines Analyten (insbesondere aufweisend ein sensorisch zu erfassendes Gas) geschaffen, wobei das Verfahren eine automatische Erkennung, ob der Sensor, insbesondere der optische Gassensor, mit einem Gerät verbunden ist, (insbesondere bejahendenfalls) eine automatische Erkennung einer für den Sensor, insbesondere für den optischen Gassensor, verwendeten Schnittstelle zu dem Gerät (oder des Geräts) und/oder eines Messbereichs des Analyten (insbesondere eines Partialdrucks oder Partialdruckbereichs des sensorisch zu erfassenden Gases), und basierend auf der automatischen Erkennung (insbesondere basierend auf beiden automatischen Erkennungen), eine automatische Anpassung des Betriebs des Sensors, insbesondere des optischen Gassensors (zum Beispiel eine automatische Anpassung des Betriebs eines Mikrocontrollers, einer Schnittstelle und der gesamten Elektronik des optischen Gassensors - insbesondere kann eine Stromversorgung von einer LED und einer Photodiode und eines Verstärker getrennt werden) aufweist.

Gemäß einem anderen exemplarischen Ausführungsbeispiel der vorliegenden Erfindung ist ein Sensor, insbesondere ein optischer Gassensor, bereitgestellt, der eine Sensorschicht (insbesondere zum Wechselwirken mit sensorisch zu erfassendem Gas), eine Strahlungsquelle (insbesondere zum optischen Anregen der Sensorschicht, weiter insbesondere zum Anregen der Sensorschicht zum Fluoreszieren), einen Strahlungsdetektor (insbesondere zum Detektieren eines Antwortsignals der Sensorschicht nach Anregung) und einen Mikrocontroller (oder eine andere Steuereinrichtung) aufweist, wobei der Mikrocontroller zum Steuern und/oder Ausführen eines Verfahrens mit den oben beschriebenen Merkmalen ausgebildet ist.

Gemäß der vorliegenden Erfindung ist eine Anordnung bereitgestellt, die einen Sensor, insbesondere einen optischen Gassensor, mit den oben beschriebenen Merkmalen und ein Gerät aufweist, mit dem der Sensor, insbesondere der optische Gassensor, verbunden oder verbindbar ist.

Gemäß der Erfindung ist ein Betriebsverfahren für einen Sensor (bevorzugt für einen Gassensor und weiter bevorzugt für einen optischen Gassensor) geschaffen, mit welchem automatisch erkannt wird, ob ein Sensor mit einem Gerät verbunden ist und falls ja, über welche Schnittstelle der Sensor verbunden ist. Hierbei kann die Schnittstelle zum Beispiel eine analoge Schnittstelle, eine digitale uni- oder bidirektionale serielle Schnittstelle mit Spannungspegeln (wo High und Low als unterschiedliche Spannungspegel codiert sind) oder eine digitale uni- oder bidirektionale serielle Stromschnittstelle (bei der High und Low als unterschiedliche Ströme codiert sind) sein. Bei einem solchen Sensor kann insbesondere eine Messzeit und/oder eine Schlafzeit des Mikrocontrollers automatisch angepasst werden. Dies kann vorteilhaft abhängig davon erfolgen, ob der Sensor eingebaut ist und/oder ob die Konzentration des Analyten in einem bestimmten Bereich ist oder nicht. Auf diese Weise kann der Stromverbrauch des Sensors so stark reduziert werden, dass ein langer Betrieb mit einer Batterie möglich ist.

Es sind mehrere Möglichkeiten denkbar, um ein Sensorsignal auszulesen. Prinzipiell wäre es möglich, für jeden Anwendungsfall einen eigenen Sensor mit dem idealen Sensorinterface zu entwickeln, jedoch ist dies kostspielig und aufwendig. Vorteilhaft ist es, einen Sensor bereitzustellen, welcher ein konfigurierbares Interface hat. Bevorzugt ist es, wenn der Sensor automatisch erkennen kann, ob er in einem Gerät eingebaut ist und welche Schnittstelle für die Kommunikation mit oder in dem Gerät zur Verfügung steht. Batteriebetrieb kann bevorzugt sein, da durch obige Maßnahmen der Stromverbrauch entsprechend stark reduziert werden kann, sodass eine sinnvolle Betriebsdauer mit einer kleinen Batterie ermöglicht ist.

Die gemäß der Erfindung gelöste Problemstellung umfasst also, dass ein Sensor (bevorzugt ein Gassensor) betrieben werden kann, sodass:
- automatisch erkannt wird, ob der Sensor in einem Gerät installiert ist
- automatisch erkannt wird, welche Schnittstelle oder welches Interface zur Kommunikation mit dem Gerät zur Verfügung steht
- analoge und digitale Kommunikation über Strom- und Spannungspegel über eine einzige 2-polige Schnittstelle möglich ist und die Schnittstelle automatisch konfiguriert wird
- der Stromverbrauch stark reduziert ist und ein sinnvoller Batteriebetrieb mit einer kleinen, im Gehäuse integrierten Batterie möglich ist, die Außenabmessungen des Sensors nicht größer als der von üblichen galvanischen Gassensoren sind und somit ein optischer Sauerstoffsensor als direkter Ersatz für einen galvanischen Sauerstoffsensor ausgebildet werden kann.

Im Weiteren werden zusätzliche Ausgestaltungen des Verfahrens, des Sensors (insbesondere eines Gassensors und weiter insbesondere eines optischen Gassensors) und der Anordnung beschrieben. Wenngleich die folgenden Ausgestaltungen anhand eines optischen Gassensors beschrieben werden, sind alle diese Ausgestaltungen auch für andere Sensoren einsetzbar, und insbesondere für andere Gassensoren.

Gemäß einem Ausführungsbeispiel kann die automatische Erkennung eine, mehrere oder alle der folgenden Maßnahmen aufweisen:
(1) automatische Erkennung, dass der optische Gassensor nicht mit einem Gerät verbunden ist, wenn ein Anschluss (insbesondere ein Sensorausgang) des optischen Gassensors offen ist;
(2) automatische Erkennung, dass der optische Gassensor mit einem Gerät mit einer analogen Schnittstelle verbunden ist, wenn ein Eingangswiderstand des Geräts in einem zugehörigen vorgebbaren Intervall liegt, insbesondere zwischen 5 kΩ und 1 MΩ, weiter insbesondere zwischen 10 kΩ und 1 MΩ;
(3) automatische Erkennung, dass der optische Gassensor mit einem Gerät mit einer digitalen Stromschnittstelle verbunden ist, wenn ein Eingangswiderstand unterhalb von einem zugehörigen vorgebbaren Schwellwert liegt, insbesondere unterhalb von 100 Ω;
(4) automatische Erkennung, dass der optische Gassensor mit einem Gerät mit einer digitalen Schnittstelle mit Spannungspegeln verbunden ist, wenn ein Eingangswiderstand oberhalb von einem zugehörigen vorgebbaren Schwellwert liegt und am Eingang des optischen Gassensors ein Spannungspegel, insbesondere über 1V, messbar ist.

Ein Verfahren für den Betrieb eines optischen Gassensors gemäß einem exemplarischen Ausführungsbeispiel der Erfindung, mit welchem automatisch erkannt wird, ob ein optischer Gassensor mit einem Gerät verbunden ist oder nicht, beziehungsweise falls ja, welche Schnittstelle (insbesondere des Geräts oder zu dem Gerät) zur Verfügung steht, beruht auf einer Messung von Spannungspegel und Eingangswiderstand des angeschlossenen Gerätes am Anschluss (insbesondere an einem Sensorausgang) des Sensors. Dabei kann es gemäß einem exemplarischen Ausführungsbeispiel mit Vorteil möglich sein, folgende vier Fälle automatisch zu unterschieden:
(1) Ist der Sensor nicht mit einem Gerät verbunden, ist der Anschluss (insbesondere ein Sensorausgang) des Gassensors offen und hochohmig.
(2) Ist der Sensor in einem Gerät mit einer analogen Schnittstelle eingebaut, ist der Eingangswiderstand des Gerätes üblicherweise zwischen 5 kΩ und 1 MΩ.
(3) Ist der Sensor in einem Gerät mit einer digitalen Stromschnittstelle eingebaut, ist der Eingangswiderstand des Gerätes üblicherweise sehr niedrig, vorzugsweise kleiner als 100 Ω.
(4) Ist der Sensor in ein Gerät mit einer digitalen Schnittstelle mit Spannungspegeln eingebaut, so ist der Eingang des Gerätes üblicherweise auch hochohmig, aber verfügt über einen Pullup-Widerstand, somit kann am Eingang oder Ausgang des Sensors ein Spannungspegel gemessen werden.

Gemäß einem Ausführungsbeispiel kann das Verfahren die automatische Erkennung an nur zwei Polen eines Anschlusses des Sensors, insbesondere an einem 2-poligen Anschluss des Sensors, insbesondere des optischen Gassensors, durchführen. Durch automatische Konfiguration des Anschlusses ist es möglich, verschiedene Schnittstellen an nur einem 2-poligen Anschluss bereitzustellen. Es können aber auch 3-polige Stecker (oder Stecker mit mehr als drei Polen) verwendet werden, bei denen entweder nur zwei Pole verwendet werden, oder zwei Pole zusammengeschaltet sind.

Gemäß der Erfindung führt der Sensor die automatische Erkennung basierend auf einer Messung von Spannungspegel und Eingangswiderstand des verbundenen Gerätes an einem Anschluss (insbesondere einem Sensorausgang) des optischen Gassensors durch.

Mit messtechnisch einfachen Mitteln ist daher eine automatische Erkennung des elektronischen Umfelds des optischen Gassensors ermöglicht, was als aussagekräftige Basis für eine stromsparende Steuerung oder Regelung des optischen Gassensors vorteilhaft ist.

Gemäß einem Ausführungsbeispiel kann die automatische Erkennung des Messbereichs des Analyten die Erkennung aufweisen, ob die Konzentration des Analyten in einem vorbestimmten Bereich ist oder nicht. Beispielsweise kann nur dann eine Messung der Gaskonzentration mittels des optischen Gassensors erforderlich sein, wenn die Konzentration des Analyten in einem bestimmten Bereich ist. Beispielsweise kann bei Tauchequipment die Messung eines Sauerstoffpartialdrucks nur nötig bzw. sinnvoll sein, wenn der Sauerstoffpartialdruck in einem vorbestimmten Bereich ist, zum Beispiel zwischen 0.6 bar und 1.6 bar. Ist der Sauerstoffpartialdruck über längere Zeit unterhalb eines vorbestimmten Schwellwerts (zum Beispiel unterhalb von 0.3 bar), kann von einer Inaktivität (zum Beispiel Lagerung) des optischen Gassensors ausgegangen werden, sodass eine Messung nicht durchzuführen ist. Dadurch ist ein stromsparender Betrieb des optischen Gassensors ermöglicht.

Gemäß einem Ausführungsbeispiel kann die automatische Anpassung eine, mehrere oder alle der folgenden Maßnahmen aufweisen:
automatische Konfiguration der Schnittstelle zum Gerät;
automatische Anpassung einer Messzeit des optischen Sensors;
automatische Anpassung eines Schlafintervalls des Mikrocontrollers, insbesondere mittels eines Timers zum Aufwecken des Mikrocontrollers nach Ablauf eines vorgebbaren Schlafintervalls;
Versorgung einer Strahlungsquelle und/oder eines Strahlungsdetektors des optischen Gassensors mit elektrischer Energie nur während eines Messzyklus, und insbesondere Trennen der Strahlungsquelle und/oder des Strahlungsdetektors von der Versorgung mit elektrischer Energie während eines Schlafintervalls des Mikrocontrollers;
bei automatischer Erkennung, dass der optische Gassensor nicht an ein Gerät angeschlossen ist, keine Durchführung von Messungen.

Somit ist eine oder sind weitere Maßnahmen möglich, um den Stromverbrauch des optischen Gassensors stark zu reduzieren. Zum einen kann ein Mikrocontroller des optischen Gassensors mit einem oder mehreren Schlafmodi ausgerüstet sein, bei denen die internen Taktgeber ausgeschaltet werden, der Prozessor keine Befehle ausführt und so der Stromverbrauch auf einen sehr geringen Schlafstrom, zum Beispiel kleiner als 5 µA, reduziert wird. Über einen integrierten Timer, welcher selbst einen sehr geringen Stromverbrauch von beispielsweise kleiner als 1 µA haben kann, kann der Mikrocontroller nach Ablauf eines Schlafintervalls wieder aufgeweckt und in einen normalen Betriebsmodus versetzt werden.

Eine weitere Maßnahme zur Reduktion des Stromverbrauches besteht darin, analoge Schaltkreise für eine Strahlungsquelle (insbesondere eine LED) und einen Strahlungsdetektor (insbesondere eine Photodiode) nur während des Messzyklus mit einer bestimmten Dauer mit Strom zu versorgen, aber während eines Schlafintervalls von der Versorgung zu trennen.

Gemäß einem Ausführungsbeispiel kann die automatische Anpassung zum Reduzieren, insbesondere zum Optimieren oder Minimieren, eines Stromverbrauchs des optischen Gassensors durchgeführt werden. Der mittlere Stromverbrauch kann weiter reduziert werden, indem der Sensor detektieren kann, ob er überhaupt in einem Gerät eingebaut ist. Wird der optische Gassensor nur gelagert, wird überhaupt keine Messungen durchgeführt.

Gemäß einem Ausführungsbeispiel kann das Verfahren ein Bestimmen einer erforderlichen Messzeit mit dem optischen Gassensor zum Erreichen einer vorgebbaren Messgenauigkeit und ein Durchführen einer Messung mit der bestimmten Messzeit aufweisen. Insbesondere kann das Bestimmen der erforderlichen Messzeit basierend auf einer Kennlinie des optischen Gassensors in Abhängigkeit von einem zu messenden Gaspartialdruck, insbesondere Sauerstoffpartialdruck, durchgeführt werden. Die erzielbare Messgenauigkeit bei einem optischen Gassensor, beispielsweise bei einem Sauerstoffsensor, hängt auch von der Messzeit ab. Ist nur eine niedrige Messgenauigkeit notwendig, kann mit kürzeren Messzeiten gearbeitet werden. Weiters kann bei gleichbleibender Messgenauigkeit bei niedrigen Gaspartialdrücken (insbesondere Sauerstoffpartialdrücken) mit kürzeren Messzeiten als bei hohen Gaspartialdrücken (insbesondere Sauerstoffpartialdrücken) gearbeitet werden, da die Kennlinie von optischen Gassensoren (insbesondere Sauerstoffsensoren) bei niedrigen Gaspartialdrücken (insbesondere Sauerstoffpartialdrücken) steiler ist.

Gemäß einem Ausführungsbeispiel kann das Verfahren ein Durchführen einer Messung mit dem optischen Gassensor mit einer vorgegebenen erhöhten Messgenauigkeit, Messfrequenz und/oder Messzeit nur auslösen, wenn eine Konzentration eines zu messenden Analyten in einem vorbestimmten Bereich liegt. Insbesondere kann das Verfahren vor der besagten Messung eine Pilotmessung mit dem optischen Gassensor mit einer gegenüber der vorgegebenen erhöhten Messgenauigkeit, Messfrequenz und/oder Messzeit geringeren Messgenauigkeit, Messfrequenz und/oder Messzeit zum Ermitteln durchführen, ob die Konzentration des zu messenden Analyten in dem vorbestimmten Bereich liegt. Eine Optimierung des Stromverbrauches kann dadurch erreicht werden, dass der Sensor nur dann mit hoher Messgenauigkeit und/oder hoher Messfrequenz misst und Daten auch nur dann überträgt, wenn die Konzentration eines Analyten in einem bestimmten Bereich ist und die Messzeit und damit die Messgenauigkeit und/oder das Schlafintervall des Mikrocontrollers dementsprechend angepasst wird oder werden. Es ist auch möglich, dass Pilotmessungen mit kurzer Messzeit und niedriger Messgenauigkeit durchgeführt werden, um festzustellen, ob die Konzentration des Analyten in einem Bereich von Interesse liegt, und nur dann Messungen mit längerer Messzeit und hoher Genauigkeit durchführt werden. Somit kann der Stromverbrauch weiter reduziert werden.

Gemäß einem Ausführungsbeispiel kann das Verfahren ein Umwandeln eines analogen Messsignals in ein digitales Messsignal mittels eines Analog-zu-Digital-Konverters aufweisen. Insbesondere kann das Verfahren ein Rückwandeln des umgewandelten digitalen Messsignals in ein rückgewandeltes analoges Messsignal mittels eines Digital-zu-Analog-Konverters aufweisen, wenn das Messsignal dem Gerät analog bereitzustellen ist. Auf diese Weise kann der optische Gassensor an seiner Schnittstelle zu einem Gerät bedarfsweise Sensorsignale in analoger oder digitaler Form bereitstellen.

Gemäß einem Ausführungsbeispiel kann der optische Gassensor eines, mehrere oder alle der folgenden Merkmale aufweisen:
eine Batterie zur Versorgung des optischen Gassensors mit elektrischer Energie;
einen Analog-zu-Digital-Konverter zum Umwandeln eines analogen Messsignals in ein digitales Messsignal;
einen Digital-zu-Analog-Konverter zum Rückwandeln eines mittels eines Analog-zu-Digital-Konverters in ein digitales Messsignal umgewandelten analogen Messsignals in ein rückgewandeltes analoges Messsignal, wenn das Messsignal dem Gerät analog bereitzustellen ist;
einen Schaltkreis zur Messung eines Widerstands an einem Anschluss (insbesondere einem Sensorausgang) des optischen Gassensors;
mindestens eine digitale Schnittstelle zum Bereitstellen eines digitalen Sensorsignals, insbesondere eine digitale Spannungspegel-Schnittstelle zum Bereitstellen des digitalen Sensorsignals als Spannungspegel und/oder eine digitale Strompegel-Schnittstelle zum Bereitstellen des digitalen Sensorsignals als Strompegel;
eine Spannungsmesseinrichtung zum Messen einer Spannung an einem Anschluss (insbesondere einem Sensorausgang) des optischen Gassensors, die insbesondere einen Analog-zu-Digital-Konverter aufweisen kann.

Alternativ oder ergänzend kann der optische Gassensor mit weiteren Komponenten ausgerüstet werden.

Gemäß einem Ausführungsbeispiel kann die Anordnung eine Steckverbindung, insbesondere eine 2-polige Steckverbindung, zum Verbinden des optischen Gassensors mit dem Gerät aufweisen. Eine solche Steckverbindung kann über einen separaten Steckverbinder bereitgestellt werden, der zwischen dem optischen Gassensor und einem damit zu verbindenden Gerät angeordnet werden kann.

Gemäß einem Ausführungsbeispiel kann das Gerät Tauchequipment, insbesondere ein Kreislauftauchgerät, aufweisen oder daraus bestehen. Ein Kreislauftauchgerät, aber auch anderes Tauchequipment (wie zum Beispiel ein Tauchcomputer, ein Mundstück oder eine Gasflasche) kann mit einem insbesondere als Sauerstoffsensor ausgebildeten optischen Gassensor ausgerüstet werden. Beim Tauchen ist es wichtig, einen Sauerstoff-Partialdruck zu kennen, um eine ausreichende Sauerstoffversorgung des Tauchers sicherzustellen.

Andere Ziele und viele der begleitenden Vorteile von Ausführungsbeispielen der vorliegenden Erfindung werden leicht wahrnehmbar werden und besser verständlich werden unter Bezugnahme auf die folgende detailliertere Beschreibung von Ausführungsbeispielen in Zusammenhang mit den beigefügten Zeichnungen. Merkmale, die im Wesentlichen oder funktionell gleich oder ähnlich sind, werden mit denselben Bezugszeichen versehen.
Figur 1 zeigt eine Anordnung aus einem optischen Gassensor und einem damit verbundenen Gerät gemäß einem exemplarischen Ausführungsbeispiel der Erfindung.
Figur 2 zeigt eine Schaltung eines optischen Gassensors gemäß einem exemplarischen Ausführungsbeispiel der Erfindung.

Die Darstellung in der Zeichnung ist schematisch. Bei den Figuren handelt es sich somit nicht um exakte Konstruktionszeichnungen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Ein Verfahren für den Betrieb eines optischen Gassensors gemäß einem exemplarischen Ausführungsbeispiel der Erfindung kann die automatische Erkennung beinhalten, ob ein Sensor eingebaut ist, die automatische Erkennung, welche Schnittstelle benutzt wird und/oder die automatische Erkennung, in welchem Messbereich der Analyt ist. Basierend darauf kann eine automatische Konfiguration der Schnittstelle und/oder eine automatische Anpassung der Messzeit und/oder des Schlafintervalls des Mikrocontrollers erfolgen. Durch diese Maßnahmen, und vor allem auch durch Kombination der Maßnahmen, kann der Stromverbrauch so stark reduziert werden, dass ein sinnvoller Betrieb mit einer im Sensor integrierten Batterie ermöglicht ist.

Insbesondere kann eine kleine Lithium-Knopfzellenbatterie mit einer Kapazität von 500 mAh bis 1000 mAh auf diese Weise viele tausend Betriebsstunden und eine jahrelange Lagerung ermöglichen. Somit ist es gemäß einem exemplarischen Ausführungsbeispiel der Erfindung möglich, einen optischen Gassensor derart auszugestalten, dass er inklusive Batterie dieselben mechanischen Abmessungen und ein pin-kompatibles 2-poliges elektrisches Interface wie ein galvanischer Sensor hat. Daher kann ein solcher optischer Gassensor gemäß einem Ausführungsbeispiel der Erfindung als direkter Ersatz für einen galvanischen Sensor eingesetzt werden.

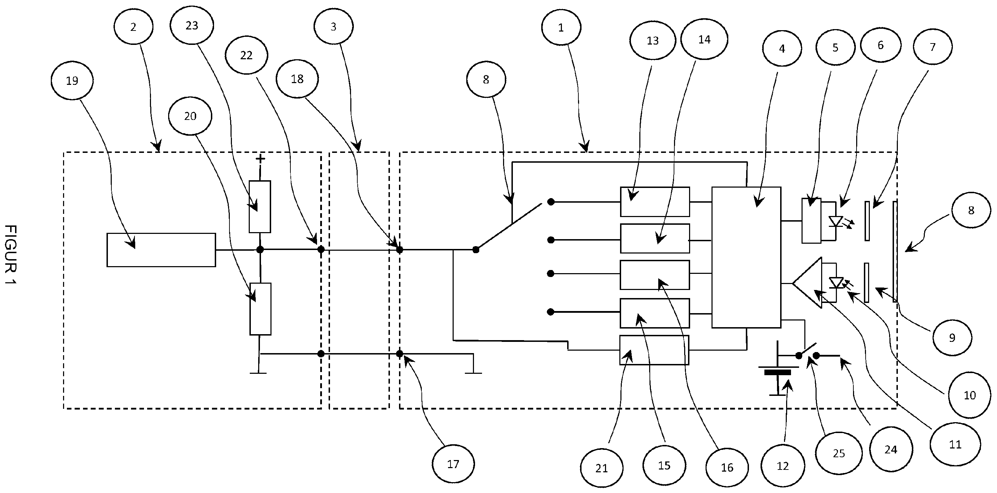

**Figur 1** zeigt eine Anordnung aus einem optischen Gassensor 1 und einem damit verbundenen Gerät 2 gemäß einem exemplarischen Ausführungsbeispiel der Erfindung.

Die in Figur 1 dargestellte Anordnung zeigt den optischen Gassensor 1 in einem Betriebsmodus, in dem dieser mit dem Gerät 2 über eine Steckverbindung 3 verbunden ist. Vorteilhaft ist die Steckverbindung 3 als 2-polige Steckverbindung zum Verbinden des optischen Gassensors 1 mit dem Gerät 2 ausgebildet. Beispielsweise kann das Gerät 2 Tauchequipment sein, zum Beispiel ein Kreislauftauchgerät. In diesem Anwendungsbeispiel kann der optische Gassensor 1 zum Messen eines Sauerstoffpartialdrucks ausgebildet sein.

Wie in Figur 1 dargestellt, weist der optische Gassensor 1 eine Sensorschicht 8 mit Pigmenten, eine zum Beispiel als LED ausgebildete Strahlungsquelle 6, einen beispielsweise als Fotodiode ausgebildeten Strahlungsdetektor 10 und einen Mikrocontroller 4 auf. Besagter Mikrocontroller 4 kann zum Steuern oder Ausführen eines Verfahrens zum Betreiben des optischen Gassensors 1 ausgebildet sein. Figur 1 zeigt ferner, dass der optische Gassensor 1 eine zum Beispiel als Lithium-Knopfzelle ausgebildete Batterie 12 zur Versorgung des optischen Gassensors 1 mit elektrischer Energie aufweisen kann.

Der Mikrocontroller 4 kann einen Analog-zu-Digital-Konverter (nicht gezeigt) zum Umwandeln eines analogen Messsignals in ein digitales Messsignal aufweisen. Alternativ kann ein solcher Analog-zu-Digital-Konverter auch von dem Mikrocontroller 4 getrennt vorgesehen sein, aber mit dem Mikrocontroller 4 gekoppelt sein. Darüber hinaus kann der optische Gassensor 1 einen Digital-zu-Analog-Konverter 14 zum Rückwandeln eines mittels des Analog-zu-Digital-Konverters in ein digitales Messsignal umgewandelten analogen Messsignals in ein rückgewandeltes analoges Messsignal aufweisen, wenn das Messsignal dem Gerät 2 analog bereitzustellen ist. Der optische Gassensor 1 hat zudem einen Schaltkreis 13 zur Messung eines Widerstands an einem Anschluss (insbesondere an einem Sensorausgang 18) des optischen Gassensors 1. Darüber hinaus können digitale Schnittstellen 15, 16 zum Bereitstellen eines digitalen Sensorsignals in dem optischen Sensor 1 vorgesehen sein. Diese können eine digitale Spannungspegel-Schnittstelle 16 zum Bereitstellen des digitalen Sensorsignals als Spannungspegel und eine digitale Strompegel-Schnittstelle 15 zum Bereitstellen des digitalen Sensorsignals als Strompegel aufweisen. Ferner kann in dem optischen Gassensor 1 eine Spannungsmesseinrichtung zum Messen einer Spannung an einem Anschluss (insbesondere am Sensorausgang 18) des optischen Gassensors 1 vorgesehen sein, die zum Beispiel als (insbesondere weiterer) Analog-zu-Digital-Konverter 21 ausgebildet sein kann.

Zum Betrieb des optischen Gassensors 1 zum Messen eines Analyten kann, insbesondere mittels des Mikrocontrollers 4, das im Weiteren näher beschriebene Betriebsverfahren ausgeführt werden: Zunächst kann bei dem Verfahren eine automatische Erkennung durchgeführt werden, ob der optische Gassensor 1 mit Gerät 2 verbunden ist. Bejahendenfalls kann dann eine automatische Erkennung einer für den optischen Gassensor 1 verwendeten Schnittstelle zu dem Gerät 2 durchgeführt werden. Alternativ oder ergänzend kann eine automatische Erkennung eines Messbereichs des Analyten erfolgen. Basierend auf Ergebnissen der ersten und/oder der zweiten automatischen Erkennung kann dann eine automatische Anpassung des Betriebs des optischen Gassensors 1 durchgeführt werden. Bevorzugt kann dies eine automatische Anpassung des Betriebs des Mikrocontrollers 4 des optischen Gassensors 1 zum Betrieb des optischen Gassensors 1 umfassen.

Zum Beispiel kann die automatische Erkennung die Ermittlung umfassen, in welchem der folgenden vier Zustände sich gegenwärtig die Anordnung aus optischen Gassensor 1 und Gerät 2 mit gegebenenfalls dazwischen angebrachter Steckverbindung 3 befindet:
(1) Automatische Erkennung, dass der optische Gassensor 1 nicht mit einem Gerät 2 verbunden ist. Dieser Zustand kann angenommen werden, wenn ein Anschluss (insbesondere Sensorausgang 18) des optischen Gassensors 1 offen ist.
(2) Automatische Erkennung, dass der optische Gassensor 1 mit einem Gerät 2 mit einer analogen Schnittstelle verbunden ist. Dieser Zustand kann angenommen werden, wenn ein Eingangswiderstand des Geräts 2 in einem zugehörigen vorgebbaren Intervall liegt, zum Beispiel zwischen 5 kΩ und 1 MΩ.
(3) Automatische Erkennung, dass der optische Gassensor 1 mit einem Gerät 2 mit einer digitalen Stromschnittstelle (insbesondere mit Strompegeln) verbunden ist. Dieser Zustand kann angenommen werden, wenn ein Eingangswiderstand unterhalb von einem zugehörigen vorgebbaren Schwellwert liegt, zum Beispiel unterhalb von 100 Ω.
(4) Automatische Erkennung, dass der optische Gassensor 1 mit einem Gerät 2 mit einer digitalen Schnittstelle mit Spannungspegeln verbunden ist. Dieser Zustand kann angenommen werden, wenn ein Eingangswiderstand oberhalb von einem zugehörigen vorgebbaren Schwellwert liegt und am Eingang des optischen Gassensors 1 ein Spannungspegel messbar ist.

Mit Vorteil kann die besagte automatische Erkennung an einem nur 2-poligen Anschluss des optischen Gassensors 1 durchführt werden. Die automatische Erkennung kann in einfacher Weise basierend auf einer Messung von Spannungspegel und Eingangswiderstand des verbundenen Geräts 2 an einem Anschluss des optischen Gassensors 1 durchführt werden. Insbesondere kann die automatische Erkennung des Messbereichs des Analyten die Erkennung aufweisen, ob die Konzentration des Analyten in einem vorbestimmten Bereich ist oder nicht. Vorzugsweise kann eine Messung nur dann durchgeführt werden, wenn die gegenwärtige Analytkonzentration in einem vorbestimmten Bereich von Interesse ist.

Die automatische Anpassung des Betriebs des optischen Gassensors 1 basierend auf den vorangehenden automatischen Erkennungen kann insbesondere die folgenden Maßnahmen aufweisen: Es wird eine automatische Konfiguration der Schnittstelle vorgenommen**.**

Ferner kann eine automatische Anpassung einer Messzeit durchgeführt werden. Es ist auch möglich, eine automatische Anpassung eines Schlafintervalls des Mikrocontrollers 4 durchzuführen. Dies kann vorteilhaft mittels eines Timers zum Aufwecken des Mikrocontrollers 4 nach Ablauf eines vorgebbaren Schlafintervalls erfolgen. Insbesondere kann auch die Versorgung der Strahlungsquelle 6 und des Strahlungsdetektors 10 des optischen Gassensors 1 mit elektrischer Energie der Batterie 12 nur während eines Messzyklus erfolgen. Hingegen können die Strahlungsquelle 6 und der Strahlungsdetektor 10 von der Versorgung mit elektrischer Energie durch die Batterie 12 während eines Schlafintervalls des Mikrocontrollers 4 abgekoppelt werden. Wird automatisch erkannt, dass der optische Gassensor 1 nicht an ein Gerät 2 angeschlossen ist, kann von der Durchführung von Messungen zum Einsparen von Strom abgesehen werden.

Zusammengefasst kann die automatische Anpassung mit dem Steuerziel bzw. Regelziel erfolgen, den Stromverbrauch des optischen Gassensors 1 im Betrieb zu reduzieren, zu optimieren oder zu minimieren.

Mit Vorteil kann das Betriebsverfahren ein Bestimmen einer erforderlichen Messzeit mit dem optischen Gassensor 1 zum Erreichen einer vorgebbaren Messgenauigkeit und ein Durchführen einer Messung mit der bestimmten Messzeit aufweisen. Hierbei kann die erforderliche Messzeit basierend auf einer Kennlinie des optischen Gassensors 1 in Abhängigkeit von einem zu messenden Sauerstoffpartialdruck bestimmt werden. Bei bestimmten, insbesondere niedrigen, Sauerstoffpartialdrücken kann die Kennlinie steiler und der optische Gassensor 1 daher empfindlicher sein als bei anderen, insbesondere hohen, Sauerstoffpartialdrücken. In Bereichen mit steilerer Kennlinie kann eine kürzere Messzeit zur Erreichung einer bestimmten Messgenauigkeit ausreichend sein als in Bereichen mit flacherer Kennlinie.

Auch kann zum Einsparen von Strom das Betriebsverfahren ein Durchführen einer Messung mit dem optischen Gassensor 1 mit einer vorgegebenen erhöhten Messgenauigkeit, Messfrequenz und/oder Messzeit nur dann getriggert werden, wenn eine Konzentration eines zu messenden Analyten in einem vorbestimmten Bereich von Interesse liegt, der zum Beispiel einen aktiven Funktionszustand des optischen Gassensors 1 (und zum Beispiel keine bloße gegenwärtige Lagerung desselben) anzeigt. Bevorzugt kann das Betriebsverfahren vor der besagten Messung eine Pilotmessung mit dem optischen Gassensor 1 mit einer gegenüber der vorgegebenen erhöhten Messgenauigkeit, Messfrequenz und/oder Messzeit geringeren Messgenauigkeit, Messfrequenz und/oder Messzeit zum Ermitteln durchführen, ob die Konzentration des zu messenden Analyten in dem vorbestimmten Bereich liegt.

Figur 1 zeigt also den beispielsweise als optischen Sauerstoffsensor ausgebildeten optischen Gassensor 1, der über die Steckverbindung 3 an das Gerät 2 angeschlossen ist. Ebenso kann der optische Gassensor 1 als Gassensor für andere Analyten ausgebildet sein.

Die Steckverbindung 3 ist im dargestellten Ausführungsbeispiel zweipolig und ist aus einem Sensorausgang 18 und einem Masseausgang 17 gebildet. Der optische Gassensor 1 hat eine Sensorschicht 8 mit Farbpigmenten, welche an der Außenseite eines transparenten Gehäuses angebracht sein kann. Diese Farbpigmente der Sensorschicht 8 werden von einer als LED ausgebildeten Strahlungsquelle 6 mit Licht für eine bestimmte Messdauer angestrahlt. Die Strahlungsquelle 6 wird über einen hier als LED-Treiber ausgebildeten Treiber 5 angesteuert. Die Farbpigmente fluoreszieren mit einer Wellenlänge größer als der des von der Strahlungsquelle 6 emittierten Lichts. Das Anregungslicht der Strahlungsquelle 6 wird vom Fluoreszenzlicht mit einem Anregungsfilter 7 und einem Emissionsfilter 9 getrennt. Nach Abschalten der Strahlungsquelle 6 klingt die Fluoreszenz innerhalb einer charakteristischen Abklingzeit ab. Die Intensität der Fluoreszenz und die Abklingzeit hängt vom Sauerstoffpartialdruck ab, bzw. allgemeiner vom sensorisch erfassten Gaspartialdruck. Je höher der Sauerstoffpartialdruck ist, desto stärker wird die Fluoreszenz gelöscht, und desto kleiner sind Amplitude des Fluoreszenzsignals beziehungsweise desto kürzer ist die Abklingzeit. Ein beispielsweise als Photodiode ausgebildeter Strahlungsdetektor 10 empfängt das emittierte Fluoreszenzlicht. Mit einem Verstärker 11 wird das Signal des Strahlungsdetektors 10 verstärkt. Der Ausgang des Verstärkers 11 ist an einen Analog-zu-Digital-Konverter im Mikrocontroller 4 angeschlossen.

Mit einem Schalter 8 kann der beispielsweise als Sensorausgang 18 ausgebildete Ausgang des optischen Gassensors 1 mit unterschiedlicher Hardware verbunden werden. In der obersten Stellung von Schalter 8 ist der Sensorausgang 18 mit einem Schaltkreis 13 zur Messung des Widerstandes am Sensorausgang 18 verbunden. Alternativ kann der Sensorausgang 18 mit einem Digital-zu-Analog-Konverter 14 verbunden werden, wenn am Sensorausgang 18 ein analoges Signal ausgegeben werden soll. Der Sensorausgang 18 kann in einer weiteren Schalterposition mit einer ersten seriellen digitalen Schnittstelle 16 verbunden werden, bei der Bits als Spannungspegel codiert sind. Schnittstelle 16 kann bevorzugt TTL- (Transistor-Transistor-Logik) und CMOS- (Complementary metaloxide-semiconductor) kompatibel sein. Schnittstelle 16 kann unidirektional nur zum Senden oder auch bidirektional zum Senden und Empfangen von Daten genutzt werden. Mit einer weiteren Schalterposition kann der Sensorausgang 18 mit einer zweiten seriellen Schnittstelle 15 verbunden werden, bei der die Pegel im Gegensatz zur ersten seriellen Schnittstelle 16 nicht als Spannungspegel, sondern als Strompegel codiert sind. Dies ist vor allem dann vorteilhaft, wenn der Sauerstoffsensor in einer Umgebung mit hoher Luftfeuchtigkeit und eventuell sogar Salzgehalt betrieben wird. Gemeinsam mit einem sehr kleinen Eingangswiderstand 20 (vorzugsweise kleiner als 100 Ω) kann so der Spannungspegel am Sensorausgang 18 und somit die Gefahr von Korrosion an den Kontakten der Steckverbindung 3 minimiert werden. Das elektrische Potential entsprechend der Spannung am Sensorausgang 18 kann mit einem weiteren Analog-zu-Digital-Konverter 21 gemessen werden.

Eine, einige oder alle der Komponenten 13, 14, 15, 16 und 21 können auch im Mikrocontroller 4 integriert sein.

Der optische Gassensor 1 wird über die eingebaute Batterie 12 versorgt. Zur vereinfachten Darstellung sind in Figur 1 keine Verbindungen zum Masseanschluss 17 oder zur Versorgung mit Batterie 12 eingezeichnet. Eine Stromversorgung 24 für die Strahlungsquelle 6, den Treiber 5 und den Verstärker 11 für den Strahlungsdetektor 10 kann über einen Schalter 25, welcher an einem digitalen Ausgang des Mikrocontrollers 4 angeschlossen ist, getrennt werden.

Wie bereits beschrieben, ist der optische Gassensor 1 über die Steckverbindung 3 an dem Gerät 2 angeschlossen. Das Gerät 2 hat einen Innenwiderstand 20.

Eine Schnittstelle 19 des Gerätes 2 ist in dem beschriebenen Ausführungsbeispiel eine der folgenden drei:
Ist das Gerät 2 als analoges Gerät für einen analogen Sauerstoffsensor mit einem Spannungsausgang konzipiert, dann ist in diesem Fall die Schnittstelle 19 ein analoger oder analog/digitaler Schaltkreis. Der Innenwiderstand 20 des Gerätes 2 beträgt in diesem Fall vorzugsweise zwischen 5kΩ und 1 MΩ. Ein Pullup-Widerstand 23 ist in diesem Fall nicht vorhanden.

In einem weiteren Fall ist das Gerät 2 als digitales Gerät mit einem unidirektionalen seriellen Empfänger oder einer bidirektionalen seriellen Schnittstelle mit Spannungspegeln konzipiert. Bezugszeichen 19 bezeichnet eine uni- oder bidirektionale Schnittstelle. Der Innenwiderstand 20 ist hochohmig und der Eingang 22 des Gerätes 2 ist mit dem Pullup-Widerstand 23 verbunden. Der Pullup-Widerstand 23 beträgt vorzugsweise zwischen 1 kΩ und 100 kΩ.

In einem weiteren Fall ist das Gerät 2 als digitales Gerät mit einer unidirektionalen seriellen Stromschnittstelle konzipiert. In diesem Fall bezeichnet Bezugszeichen 19 eine unidirektionale serielle Stromschnittstelle. Der Innenwiderstand 20 beträgt in diesem Szenario vorzugsweise kleiner 100 Ω.

In Figur 1 sind im Gerät 2 der Einfachheit halber nur der Eingangsschaltkreis 19 und die beiden Widerstände 20 und 23 eingezeichnet. Üblicherweise beinhaltet das Gerät 2 noch weitere Komponenten wie zum Beispiel ein Mikrocontroller, analoge und digitale Schaltkreise, eine Anzeige, etc.

Im Weiteren wird eine Funktionsweise einer automatischen Zustandsmaschine beschrieben, die in der in Figur 1 dargestellten Anordnung bzw. in dem optischen Gassensor 1 implementiert ist.

Das Verfahren zum Betrieb des optischen Gassensors 1 kann in dem Mikrocontroller 4 als automatische Zustandsmaschine oder auch Zustandsautomat implementiert werden, um den Ausgang (insbesondere Sensorausgang 18) entsprechend dem angeschlossenen Gerät 2 automatisch zu konfigurieren und den Stromverbrauch des optischen Gassensors 1 je nach Einsatzbedingung oder Lager automatisch einzustellen, insbesondere zu optimieren.

Nachfolgend wird ein Zustand 1 beschrieben:
Ist der optische Gassensor 1 nicht in einem Gerät 2 eingebaut, ist die Schaltung 13 zur Messung des Widerstandes mit dem Ausgang verbunden. Ist der optische Gassensor 1 nicht eingebaut, ist der Ausgang hochohmig. Über die Schaltung 13 wird ein hochohmiger Ausgang erkannt. über den Analog-zu-Digital-Konverter 21 wird kein Potential gemessen. Der Schalter 25 ist geöffnet. Es werden keine Sauerstoffmessungen durchgeführt. Die analogen Schaltkreise werden von der Stromversorgung getrennt und der Mikrocontroller 4 wird für ein vorgebbares Intervall in den Schlafmodus versetzt. Nach dem Ablauf des Intervalls wacht der Mikrocontroller 4 auf. Nun wird dieselbe Funktion ausgeführt, um zu überprüfen, ob der optische Gassensor 1 mit einem Gerät 2 verbunden ist oder nicht.

Ist der vorzugsweise als Sauerstoffsensor ausgebildete optische Gassensor 1 an ein Gerät 2 mit einer uni- oder bidirektionalen seriellen Schnittstelle mit einem Pullup-Widerstand 23 angeschlossen, so wird bei der Überprüfung in Zustand 1 mit dem Analog-zu-Digital-Konverter 21 ein elektrisches Potential, vorzugsweise größer als 1 V, am Ausgang erkannt und die Zustandsmaschine wechselt zu Zustand 2.

Ist der optische Gassensor 1 in einem Gerät 2 eingebaut, welches für galvanische Sauerstoffsensoren mit analogem Spannungsausgang konzipiert ist, wird mit der Schaltung 13 zur Messung des Widerstandes ein Widerstand am Ausgang zwischen beispielsweise 1 kΩ und 1 MΩ gemessen. In der Folge wechselt die Zustandsmaschine zu Zustand 3.

Ist der optische Gassensor 1 in einem Gerät 2 eingebaut, welches für Sauerstoffsensoren mit digitalem seriellen Stromausgang konzipiert ist, wird mit der Schaltung 13 zur Messung des Widerstandes ein Widerstand am Ausgang beispielsweise zwischen 0 und 100 Ω gemessen. In der Folge wechselt die Zustandsmaschine zu Zustand 4.

Nachfolgend wird Zustand 2 beschrieben:
Der Mikrocontroller 4 schaltet mit dem Schalter 8 die zweite digitale serielle Schnittstelle 15 an den Sensorausgang 18. Messdaten werden seriell übertragen. Vorzugsweise ist die Schnittstelle 15 als bidirektionale single duplex Schnittstelle konfiguriert, somit ist eine bidirektionale Kommunikation möglich.

Die Strahlungsquelle 6, der Treiber 5 und der Verstärker 11 für den Strahlungsdetektor 10 werden über den Schalter 25 mit Strom für eine vorgebbare Messzeit versorgt, und der Sauerstoffpartialdruck wird gemessen. Der Messwert wird digital über die zweite digitale serielle Schnittstelle 15 ausgegeben. Anschließend wird der Mikrocontroller 4 für ein vorgebbares Schlafintervall in den Schlafzustand gesetzt, um danach wieder die nächste Messung durchzuführen.

Zustand 2 kann zur Messdatenübertragung aber auch zur Konfiguration und für ein Firmwareupdate des optischen Gassensors 1 genutzt werden. Wird der optische Gassensor 1 aus dem Gerät 2 ausgebaut oder wird der Pullup-Widerstand 23 deaktiviert, wird über den Analog-zu-Digital-Konverter 21 am Sensorausgang 18 kein Potential mehr gemessen, und der optische Gassensor 1 geht in Zustand 1.

Nachfolgend wird Zustand 3 beschrieben:
Der Mikrocontroller 4 schaltet mit dem Schalter 8 den Digital-zu-Analog-Konverter 14 an den Sensorausgang 18.

Die Strahlungsquelle 6, der Treiber 5 und der Verstärker 11 für den Strahlungsdetektor 10 werden über den Schalter 25 mit Strom für eine vorgebbare Messzeit versorgt, und der Sauerstoffpartialdruck wird gemessen. Der Messwert wird als analoges Spannungssignal über den Digital-zu-Analog-Konverter 14 ausgegeben. Anschließend wird der Mikrocontroller 4 für einen vorgebbaren Schlafzeitraum in den Schlafzustand gesetzt, um danach wieder die nächste Messung durchzuführen.

In regelmäßigen Intervallen, vorzugsweise größer als 1 min, wird Schalter 8 kurzzeitig mit der Schaltung 13 zur Messung des Ausgangswiderstandes verbunden, um zu überprüfen, ob der optische Gassensor 1 noch in einem Gerät 2 installiert ist. Wird dann ein offener und/oder hochohmiger Ausgang detektiert, wechselt die Zustandsmaschine zu Zustand 1.

Nachfolgend wird Zustand 4 beschrieben:
Der Mikrocontroller 4 schaltet mit dem Schalter 8 die digitale serielle Stromschnittstelle 16 an den Sensorausgang 18.

Die Strahlungsquelle 6, der Treiber 5 und der Verstärker 11 für den Strahlungsdetektor 10 werden über den Schalter 25 mit Strom für eine vorgebbare Messzeit versorgt, und der Sauerstoffpartialdruck wird gemessen. Der Messwert wird digital über die digitale serielle Stromschnittstelle 16 ausgegeben. Anschließend wird der Mikrocontroller 4 für ein vorgebbares Schlafintervall in den Schlafzustand gesetzt, um danach wieder die nächste Messung durchzuführen.

In regelmäßigen Intervallen wird Schalter 8 kurzzeitig mit der Schaltung 13 zur Messung des Ausgangswiderstandes verbunden, um zu überprüfen, ob der optische Gassensor 1 noch in einem Gerät 2 installiert ist. Wird dann ein offener und/oder hochohmiger Ausgang detektiert, wechselt die Zustandsmaschine zu Zustand 1.

Vorteilhaft kann der Stromverbrauch mit der beschriebenen Zustandsmaschine sehr stark reduziert werden, da:
- Sauerstoffmessungen nur bei Zustand 2-4 durchgeführt werden und somit die Strahlungsquelle 6, der Treiber 5 und der Verstärker 11 für den Strahlungsdetektor 10 nicht mit Strom versorgt werden müssen.
- das besagte Schlafintervall abhängig vom Zustand gesetzt werden kann. So kann das besagte Schlafintervall für Zustand 1 größer als 10 s, vorzugsweise größer als 1 min, sein, während das besagte Schlafintervall in Zustand 2-4, entsprechend der Zeit zwischen zwei Sauerstoffmessungen, vorzugsweise 0.5 s bis 10 s beträgt.
- die besagte Messzeit abhängig vom Sauerstoffpartialdruck eingestellt werden kann. Bei niedrigen Sauerstoffpartialdrücken kann bei gleichbleibender Genauigkeit eine kürzere Messzeit als bei hohen Sauerstoffpartialdrücken verwendet werden. So kann beispielsweise bei einem Sauerstoffpartialdruck von 0.2 bar und einer Messzeit von 2 ms die gleiche Genauigkeit erreicht werden wie bei einem Sauerstoffpartialdruck von 1.5 bar und einer Messzeit von 10 ms. Durch die verkürzte Messzeit wird aber für die Messung bei 0.2 bar nur ein Fünftel der Energie verbraucht.
- bei vielen Anwendungen Sauerstoffpartialdrücke nur in einem bestimmten Messbereich auftreten. So kann in Kreislauftauchgeräten, in denen Sauerstoffsensoren zur Regelung der Sauerstoffzuführung eingesetzt werden können, üblicherweise mit einem Sauerstoffpartialdruck von 0.6 bar bis 1.6 bar gearbeitet. Während der Lagerung von so einem Kreislauftauchgerät, wenn das Gerät nicht in Verwendung ist, ist die Sauerstoffzuführung geschlossen und der Kreislauf offen, und so befindet sich im Gerät nur Luft mit 21% Sauerstoff. Wenn der Sauerstoffsensor einen Sauerstoffpartialdruck unter einem gewissen Schwellwert, beispielsweise 0.3 bar, misst, ist das Gerät anscheinend nicht in Verwendung, und das Schlafintervall kann verlängert werden, beispielsweise auf 1 min verlängert werden.

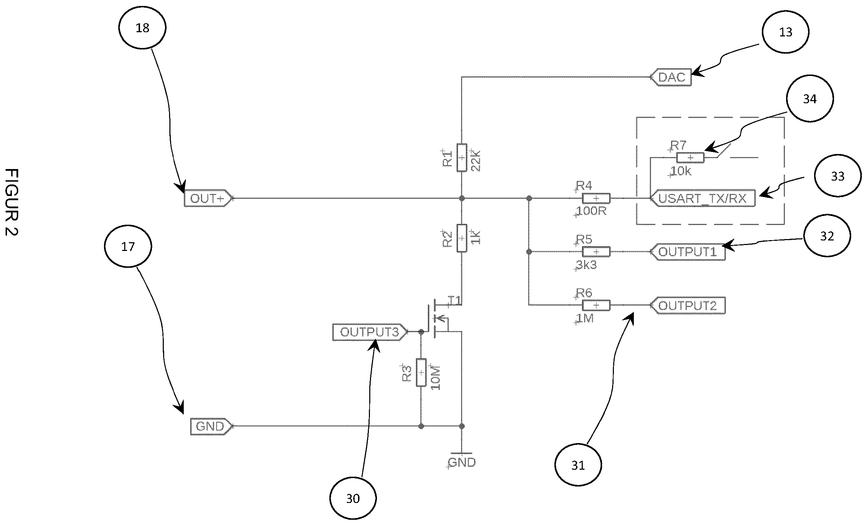

**Figur 2** zeigt eine Schaltung eines optischen Gassensors 1 gemäß einem exemplarischen Ausführungsbeispiel der Erfindung.

Figur 2 zeigt eine einfache Implementierung der Schnittstelle und Zustandsmaschine mit einem kostengünstigen Mikrocontroller 4, in welchem ein Digital-zu-Analog-Konverter 13 und eine serielle USART Schnittstellen integriert sind. Die Ein- und Ausgangspins des Mikrocontrollers 4 können als Ausgang oder als hochohmiger Eingang konfiguriert werden. Ebenso kann der Ausgang des Digital-zu-Analog-Konverters 13 und der kombinierte Sende-/Empfangspin 33 eines USART Interfaces auch alternativ als hochohmiger Eingang konfiguriert werden. Sind sie hochohmig konfiguriert, gibt es eine Schaltschwelle, ab welcher ein Signal als High - bzw. wenn der Pegel darunter ist - als Low erkannt wird.

In Zustand 1 sind zuerst der Ausgangspin des Digital-zu-Analog-Konverters 13, der Ausgangspin "1" 32, der Ausgangspin "2" 31 und der Ausgangspin "3" 30 als hochohmige Eingänge konfiguriert. Der interne Pullup-Widerstand 34 ist ausgeschaltet. Ist am Sensorausgang 18 ein Gerät 2 mit einer uni- oder bidirektionalen seriellen Schnittstelle mit einem Pullup-Widerstand 23 angeschlossen, ist der als hochohmiger Eingang konfigurierte Sende-/Empfangspin 33 High. Die Zustandsmaschine wechselt zu Zustand 2.

Andernfalls wird der Ausgangspin "1" 32 wieder als Eingang konfiguriert und der Ausgangspin "2" 31 als Ausgang und auf High gesetzt. Ist der optische Gassensor 1 nicht an einem Gerät 2 angeschlossen, ist der Ausgang 18 hochohmig und der als Eingang konfigurierte Sende-/Empfangspin 33 ist High. Die Zustandsmaschine bleibt in Zustand 1.

Andernfalls wird der Ausgangspin "1" 32 als Ausgang konfiguriert und auf High gesetzt. Ist der Sensorausgang 18 an ein Gerät 2 angeschlossen, das mit digitalem seriellen Stromausgang konzipiert ist und einen Eingangswiderstand 20 kleiner als 100 Ω hat, wirkt der Eingangswiderstand 20 des Gerätes 2 zusammen mit dem Widerstand R5 mit einem beispielsweisen Wert von 3.3 kΩ als Spannungsteiler. Die Spannung am als Eingang konfigurierten Sende-/ Empfangspin 33 ist unterhalb des Schwellwertes und wird somit als Low erkannt, und die Zustandsmaschine wechselt zu Zustand 4.

Andernfalls wechselt die Zustandsmaschine in Zustand 3, da offensichtlich der Sensor 1 an einem Gerät 2 angeschlossen ist, dies aber kein Gerät 2 mit einer digitalen Schnittstelle ist. Somit legt ein Gerät 2 mit analoger Schnittstelle vor, beispielsweise mit einem Eingangswiderstand zwischen 10 kΩ und 500 kΩ.

In Zustand 2 sind der Ausgang des Digital-zu-Analog-Konverters 13, der Ausgang "1" 32, der Ausgang "2" 31 und der Ausgang "3" 30 als hochohmige Eingänge und die digitale Schnittstelle 33 als Ein-Draht uni- oder bidirektionale single duplex serielle Schnittstelle USART konfiguriert. Der Ausgang der seriellen Schnittstelle ist als Open Collector Ausgang konfiguriert. Der interne Pullup-Widerstand 34 ist ausgeschaltet. Der optische Gassensor 1 ist an einem Gerät 2 mit hochohmigen Eingang und Pullup-Widerstand 23 angeschlossen, somit findet eine Signalübertragung mit unterschiedlichen Spannungspegeln High und Low statt.

In Zustand 4 sind der Ausgang des Digital-zu-Analog-Konverters 13, der Ausgang "1" 32, der Ausgang "2" 31 und der Ausgang "3" 30 als hochohmige Eingänge und die digitale Schnittstelle 33 als Ein-Draht uni- oder bidirektionale serielle single duplex Schnittstelle USART konfiguriert. Der Ausgang der seriellen Schnittstelle ist als Open Collector Ausgang konfiguriert. Der interne Pullup-Widerstand 34 der Schnittstelle mit üblicherweise 10 kΩ bis 50 kΩ ist eingeschaltet, und der Widerstand R4 ist in Serie mit einem niederohmigen Eingangswiderstand 23 mit vorzugsweise kleiner als 100 Ω. Wird beispielsweise der Mikrocontroller 4 mit einer Spannung von 2 V versorgt, fließt bei High ein Strom von zirka 200 µA und bei Low kein Strom. Nur bei High gibt es am Sensorausgang 18 des optischen Gassensors 1 ein kleines elektrisches Potential kleiner als 20 mV, welches jedoch zu niedrig ist, um eine Korrosion am Stecker selbst in feuchten und salzhaltigen Umgebungen zu beschleunigen.

In Zustand 3 sind der Ausgang "1" 32, der Ausgang "2" 31 und die digitale Schnittstelle 33 als hochohmige Eingänge konfiguriert. Der interne Pullup-Widerstand 34 ist ausgeschaltet. Der Ausgang 3 ist als Ausgang konfiguriert und wird auf High gesetzt. Somit schaltet der N-FET T1 Drain gegen den Masseanschluss 17. Die Ausgangsspannung vom Digital-zu-Analog-Konverter 13 wird mit einem Spannungsteiler aus R1 und R2 auf den typischen Ausgangsspanungsbereich von analogen galvanischen Sensoren geteilt.

Es sollte angemerkt werden, dass der Begriff "aufweisen" nicht andere Elemente ausschließt und dass das "ein" nicht eine Mehrzahl ausschließt.

## Patentansprüche

1. Verfahren zum Betrieb eines Sensors, insbesondere eines optischen Gassensors (1), mit einem Anschluss (3) mit mindestens 2 Polen, zum Messen eines Analyten, wobei das Verfahren aufweist:
automatische Erkennung ob der Sensor, insbesondere der optische Gassensor (1), mit einem Gerät (2) verbunden ist;
automatische Erkennung einer für den Sensor, insbesondere den optischen Gassensor (1), verwendeten analogen Schnittstelle und/oder digitalen seriellen Schnittstelle mit Strompegel (15) und/oder digitalen seriellen Schnittstelle mit Spannungspegel (16) zu dem Gerät (2); und
basierend auf der automatischen Erkennung, automatische Anpassung des Betriebs des Sensors, insbesondere des optischen Gassensors (1),
wobei das Verfahren die automatische Erkennung über die 2 Pole des Anschlusses (3) des Sensors, insbesondere des optischen Gassensors (1), durch Messung eines Eingangswiderstands des an den 2 Polen angeschlossenen Gerätes (2) und/oder durch Messung eines Spannungspegels des an den 2 Polen angeschlossenen Gerätes (2) umfasst;
wobei die automatische Erkennung folgende Maßnahme aufweist:
automatische Erkennung, dass der Sensor, insbesondere der optische Gassensor (1),
mit dem Gerät (2) mit einer analogen Schnittstelle verbunden ist, wenn ein Eingangswiderstand des Gerätes (2) in einem zugehörigen vorgebbaren Intervall liegt;
und/oder mit dem Gerät (2) mit einer digitalen seriellen Schnittstelle mit Strompegel (15) verbunden ist, wenn ein Eingangswiderstand unterhalb von einem zugehörigen vorgebbaren Schwellwert liegt;
und/oder mit dem Gerät (2) mit einer digitalen seriellen Schnittstelle mit Spannungspegel (16) verbunden ist, wenn an einem Eingang des Sensors, insbesondere des optischen Gassensors (1), ein Spannungspegel messbar ist;
wobei die automatische Anpassung eine, mehrere oder alle der folgenden Maßnahmen aufweist:
automatische Konfiguration der 2 Pole des Anschlusses (3) entsprechend des erkannten Gerätes als: analoger Schnittstelle, serieller digitaler Schnittstelle mit Strompegel (15), serieller digitaler Schnittstelle mit Spannungspegel (16).

2. Verfahren gemäß Anspruch 1, wobei die automatische Erkennung eine, mehrere oder alle der folgenden Maßnahmen aufweist:
automatische Erkennung, dass der Sensor, insbesondere der optische Gassensor (1), nicht mit dem Gerät (2) verbunden ist, wenn ein Anschluss des optischen Gassensors (1) offen ist;
automatische Erkennung, dass der Sensor, insbesondere der optische Gassensor (1), mit dem Gerät (2) mit der analogen Schnittstelle verbunden ist, wenn ein Eingangswiderstand des Geräts (2) zwischen 5 kΩ und 1 MΩ liegt;
automatische Erkennung, dass der Sensor, insbesondere der optische Gassensor (1), mit dem Gerät (2) mit der digitalen Stromschnittstelle mit Strompegel (15) verbunden ist, wenn ein Eingangswiderstand unterhalb von 100 Ω liegt;
automatische Erkennung, dass der Sensor, insbesondere der optische Gassensor (1), mit dem Gerät (2) mit einer digitalen Schnittstelle mit Spannungspegeln (16) verbunden ist, wenn an einem Eingang des Sensors, insbesondere des optischen Gassensors (1), ein Spannungspegel größer als 1V messbar ist.

3. Verfahren gemäß Anspruch 1 oder 2, aufweisend das folgende Merkmal:
wobei eine automatische Erkennung des Messbereichs des Analyten die Erkennung aufweist, ob die Konzentration des Analyten in einem vorbestimmten Bereich ist oder nicht.

4. Verfahren gemäß einem der Ansprüche 1 bis 3, wobei die automatische Anpassung eine, mehrere oder alle der folgenden Maßnahmen aufweist:
bei automatischer Erkennung, dass der Sensor, insbesondere der optische Gassensor (1), nicht an dem Gerät (2) angeschlossen ist, keine Durchführung von Messungen.

5. Verfahren gemäß einem der Ansprüche 1 bis 4, wobei die automatische Anpassung zum Reduzieren, insbesondere zum Optimieren oder zum Minimieren, eines Stromverbrauchs des Sensors, insbesondere des optischen Gassensors (1), durchgeführt wird.

6. Verfahren gemäß einem der Ansprüche 1 bis 5, wobei das Verfahren ein Durchführen einer Messung mit dem Sensor, insbesondere dem optischen Gassensor (1), mit einer vorgegebenen erhöhten Messgenauigkeit nur auslöst, wenn eine Konzentration des Analyten in einem vorbestimmten Bereich liegt.

7. Verfahren gemäß Anspruch 6, wobei das Verfahren vor der besagten Messung eine Pilotmessung mit dem Sensor, insbesondere dem optischen Gassensor (1), mit einer gegenüber der vorgegebenen erhöhten Messgenauigkeit geringeren Messgenauigkeit zum Ermitteln durchführt, ob die Konzentration des zu messenden Analyten in dem vorbestimmten Bereich liegt.

8. Verfahren gemäß einem der Ansprüche 1 bis 7, wobei das Verfahren ein Umwandeln eines analogen Messsignals in ein digitales Messsignal mittels eines Analog-zu-Digital-Konverters aufweist.

9. Verfahren gemäß Anspruch 8, wobei das Verfahren ein Rückwandeln des umgewandelten digitalen Messsignals in ein rückgewandeltes analoges Messsignal mittels eines Digital-zu-Analog-Konverters (14) aufweist, wenn das Messsignal dem Gerät (2) analog bereitzustellen ist.

10. Sensor, insbesondere optischer Gassensor (1),
aufweisend eine Sensorschicht (8), eine Strahlungsquelle (6), einen Strahlungsdetektor (10) und einen Mikrocontroller (4),
**dadurch gekennzeichnet, dass** der Mikrocontroller (4) zum Steuern und/oder Ausführen eines Verfahrens gemäß einem der Ansprüche 1 bis 9 ausgebildet ist.

11. Sensor, insbesondere optischer Gassensor (1), gemäß Anspruch 10, aufweisend eines, mehrere oder alle der folgenden Merkmale:
eine Batterie (12) zur Versorgung des Sensors, insbesondere des optischen Gassensors (1), mit elektrischer Energie;
einen Analog-zu-Digital-Konverter zum Umwandeln eines analogen Messsignals in ein digitales Messsignal;
einen Digital-zu-Analog-Konverter (14) zum Rückwandeln eines mittels eines Analog-zu-Digital-Konverters in ein digitales Messsignal umgewandelten analogen Messsignals in ein rückgewandeltes analoges Messsignal, wenn das Messsignal dem Gerät (2) analog bereitzustellen ist;
einen Schaltkreis (13) zur Messung eines Widerstands an einem Anschluss des Sensors, insbesondere des optischen Gassensors (1);
mindestens eine digitale Schnittstelle (15, 16) zum Bereitstellen eines digitalen Sensorsignals, insbesondere eine digitale Spannungspegel-Schnittstelle (16) zum Bereitstellen des digitalen Sensorsignals als Spannungspegel und/oder eine digitale Strompegel-Schnittstelle (15) zum Bereitstellen des digitalen Sensorsignals als Strompegel;
eine Spannungsmesseinrichtung zum Messen einer Spannung an einem Anschluss des Sensors, insbesondere des optischen Gassensors (1), insbesondere ausgebildet mittels eines Analog-zu-Digital-Konverters (21).

12. Anordnung, aufweisend:
einen Sensor, insbesondere einen optischen Gassensor (1), gemäß Anspruch 10 oder 11; und
ein Gerät (2), mit dem der Sensor, insbesondere der optische Gassensor, (1) verbunden oder verbindbar ist.

13. Anordnung gemäß Anspruch 12, aufweisend zumindest eines der folgenden Merkmale:
aufweisend eine Steckverbindung (3), insbesondere eine 2-polige Steckverbindung, zum Verbinden des Sensors, insbesondere des optischen Gassensors (1), mit dem Gerät (2);
wobei das Gerät (2) Tauchequipment, insbesondere ein Kreislauftauchgerät, aufweist oder daraus besteht.

## Claims

1. Method for operating a sensor, in particular an optical gas sensor (1), having a connection (3) with at least 2 poles, for measuring an analyte, wherein the method comprises:
automatic detection of whether the sensor, in particular the optical gas sensor (1), is connected to a device (2);
automatic detection of an analog interface and/or digital serial interface with current level (15) and/or digital serial interface with voltage level (16) used for the sensor, in particular the optical gas sensor (1), to the device (2); and
based on the automatic detection, automatic adaptation of the operation of the sensor, in particular of the optical gas sensor (1),
wherein the method comprises the automatic detection via the 2 poles of the connection (3) of the sensor, in particular of the optical gas sensor (1), by measuring an input resistance of the device (2) connected to the 2 poles and/or by measuring a voltage level of the device (2) connected to the 2 poles;
wherein the automatic detection comprises the following measure:
automatic detection that the sensor, in particular the optical gas sensor (1),
is connected to the device (2) with an analog interface if an input resistance of the device (2) lies in an associated predefinable interval;
and/or is connected to the device (2) with a digital serial interface with current level (15) if an input resistance lies below an associated predefinable threshold value;
and/or is connected to the device (2) with a digital serial interface with voltage level (16) if a voltage level can be measured at an input of the sensor, in particular of the optical gas sensor (1);
wherein the automatic adaptation comprises one, several or all of the following measures:
automatic configuration of the 2 poles of the connection (3) according to the detected device as: analog interface, serial digital interface with current level (15), serial digital interface with voltage level (16).

2. Method according to claim 1, wherein the automatic detection comprises one, several or all of the following measures:
automatic detection that the sensor, in particular the optical gas sensor (1), is not connected to the device (2) if a connection of the optical gas sensor (1) is open;
automatic detection that the sensor, in particular the optical gas sensor (1), is connected to the device (2) with the analog interface if an input resistance of the device (2) lies between 5 kΩ and 1 MΩ;
automatic detection that the sensor, in particular the optical gas sensor (1), is connected to the device (2) with the digital current interface with current level (15) if an input resistance lies below 100 Ω;
automatic detection that the sensor, in particular the optical gas sensor (1), is connected to the device (2) with a digital interface with voltage level (16) if a voltage level greater than 1 V can be measured at an input of the sensor, in particular of the optical gas sensor (1).

3. Method according to claim 1 or 2, comprising the following feature:
wherein an automatic detection of the measuring range of the analyte comprises the detection whether or not the concentration of the analyte is in a predetermined range.

4. Method according to one of claims 1 to 3, wherein the automatic adaptation comprises one, several or all of the following measures:
in the case of automatic detection that the sensor, in particular the optical gas sensor (1), is not connected to the device (2), no performance of measurements.

5. Method according to one of claims 1 to 4, wherein the automatic adaptation is performed for reducing, in particular for optimizing or for minimizing, a power consumption of the sensor, in particular of the optical gas sensor (1).

6. Method according to one of claims 1 to 5, wherein the method triggers a performance of a measurement with the sensor, in particular the optical gas sensor (1), with a predetermined increased measuring accuracy only if a concentration of the analyte is in a predetermined range.

7. Method according to claim 6, wherein the method performs, before said measurement, a pilot measurement with the sensor, in particular the optical gas sensor (1), with a lower measuring accuracy compared to the predetermined increased measuring accuracy for determining whether the concentration of the analyte to be measured is in the predetermined range.

8. Method according to one of claims 1 to 7, wherein the method comprises converting an analog measuring signal into a digital measuring signal by means of an analog-to-digital converter.

9. Method according to claim 8, wherein the method comprises back-converting the converted digital measuring signal into a back-converted analog measuring signal by means of a digital-to-analog converter (14) if the measuring signal is to be provided to the device (2) in an analog manner.

10. Sensor, in particular optical gas sensor (1),
comprising a sensor layer (8), a radiation source (6), a radiation detector (10) and a microcontroller (4),
**characterised in that** the microcontroller (4) is designed to control and/or carry out a method according to one of claims 1 to 9.

11. Sensor, in particular optical gas sensor (1), according to claim 10, comprising one, several or all of the following features:
a battery (12) for supplying the sensor, in particular the optical gas sensor (1), with electrical energy;
an analog-to-digital converter for converting an analog measuring signal into a digital measuring signal;
a digital-to-analog converter (14) for back-converting an analog measuring signal converted into a digital measuring signal by means of an analog-to-digital converter into a back-converted analog measuring signal if the measuring signal is to be provided to the device (2) in an analog manner;
a circuit (13) for measuring a resistance at a connection of the sensor, in particular of the optical gas sensor (1);
at least one digital interface (15, 16) for providing a digital sensor signal, in particular a digital voltage level interface (16) for providing the digital sensor signal as voltage level and/or a digital current level interface (15) for providing the digital sensor signal as current level;
a voltage measuring device for measuring a voltage at a connection of the sensor, in particular of the optical gas sensor (1), in particular formed by means of an analog-to-digital converter (21).

12. Arrangement, comprising:
a sensor, in particular an optical gas sensor (1), according to claim 10 or 11; and
a device (2) to which the sensor, in particular the optical gas sensor (1), is connected or can be connected.

13. Arrangement according to claim 12, comprising at least one of the following features:
comprising a plug connection (3), in particular a 2-pole plug connection, for connecting the sensor, in particular the optical gas sensor (1), to the device (2);
wherein the device (2) comprises or consists of immersion equipment, in particular a circulation immersion device.

## Revendications

1. Procédé de fonctionnement d'un capteur, en particulier d'un capteur de gaz optique (1), avec un raccordement (3) comprenant au moins 2 pôles, afin de mesurer un analyte, dans lequel le procédé comprend les étapes consistant à :
détecter de manière automatique si le capteur, en particulier le capteur de gaz optique (1), est connecté à un appareil (2) ;
détecter de manière automatique une interface analogique et/ou une interface série numérique avec niveau d'intensité (15) et/ou une interface série numérique avec niveau de tension (16) qui est utilisée pour le capteur, en particulier pour le capteur de gaz optique (1) ; et
sur la base de la détection automatique, adapter de manière automatique le fonctionnement du capteur, en particulier du capteur de gaz optique (1),
dans lequel le procédé comprend une détection automatique sur les 2 pôles du raccordement (3) du capteur, en particulier du capteur de gaz optique (1), grâce à une étape consistant à mesurer une résistance d'entrée de l'appareil (2) connecté aux 2 pôles et/ou grâce à une étape consistant à mesurer un niveau de tension de l'appareil (2) connecté aux 2 pôles ;
dans lequel la détection automatique comprend les étapes ci-dessous consistant à :
détecter de manière automatique que le capteur, en particulier le capteur de gaz optique (1),
est connecté à l'appareil (2) grâce à une interface analogique, lorsqu'une résistance d'entrée de l'appareil (2) se situe dans un intervalle associé pouvant être prédéfini ;
et/ou est connecté à l'appareil (2) grâce à une interface série numérique avec niveau d'intensité (15), lorsqu'une résistance d'entrée est inférieure à un seuil associé pouvant être prédéfini ;
et/ou est connecté à l'appareil (2) grâce à une interface série numérique avec niveau de tension (16), lorsqu'un niveau de tension peut être mesuré à une entrée du capteur, en particulier du capteur de gaz optique (1) ;
dans lequel l'ajustement automatique comprend une, plusieurs ou toutes les étapes ci-dessous consistant à :
configurer de manière automatique les 2 pôles du raccordement (3), en fonction de l'appareil détecté, en tant que : interface analogique, interface numérique série avec niveau d'intensité (15), interface numérique série avec niveau de tension (16).

2. Procédé selon la revendication 1, dans lequel la détection automatique comprend une, plusieurs ou toutes les étapes ci-dessous consistant à :
détecter de manière automatique que le capteur, en particulier le capteur de gaz optique (1), n'est pas connecté à l'appareil (2), lorsqu'un raccordement du capteur de gaz optique (1) est ouvert ;
détecter de manière automatique que le capteur, en particulier le capteur de gaz optique (1), est connecté à l'appareil (2) grâce à l'interface analogique, lorsqu'une résistance d'entrée de l'appareil (2) est comprise entre 5 kΩ et 1 MΩ ;
détecter de manière automatique que le capteur, en particulier le capteur de gaz optique (1), est connecté à l'appareil (2) grâce à l'interface numérique avec niveau d'intensité (15), lorsqu'une résistance d'entrée est inférieure à 100 Ω ;
détecter de manière automatique que le capteur, en particulier le capteur de gaz optique (1), est connecté à l'appareil (2) grâce à une interface numérique avec des niveaux de tension (16), lorsqu'un niveau de tension supérieur à 1 V peut être mesuré à une entrée du capteur, en particulier du capteur de gaz optique (1).

3. Procédé selon la revendication 1 ou 2, présentant la caractéristique ci-dessous :
la détection automatique de la plage de mesure de l'analyte détecte si la concentration de l'analyte se situe ou non dans une plage prédéterminée.

4. Procédé selon l'une quelconque des revendications 1 à 3, dans lequel l'ajustement automatique comprend une, plusieurs ou toutes les étapes ci-dessous consistant à :
en cas de détection automatique que le capteur, en particulier le capteur de gaz optique (1), n'est pas connecté à l'appareil (2), ne pas mettre en œuvre des mesures.

5. Procédé selon l'une quelconque des revendications 1 à 4, dans lequel l'ajustement automatique est mis en œuvre afin de réduire, en particulier afin d'optimiser ou de minimiser, une consommation d'intensité du capteur, en particulier du capteur de gaz optique (1).

6. Procédé selon l'une quelconque des revendications 1 à 5, dans lequel le procédé ne déclenche une mise en œuvre d'une mesure par le capteur, en particulier par le capteur de gaz optique (1), avec une précision de mesure accrue prédéterminée que lorsqu'une concentration de l'analyte se situe dans une plage prédéterminée.

7. Procédé selon la revendication 6, dans lequel, avant ladite mesure, le procédé met en œuvre une mesure pilote par le capteur, en particulier par le capteur de gaz optique (1), avec une précision de mesure inférieure à une précision de mesure accrue prédéterminée, afin de déterminer si la concentration de l'analyte à mesurer se situe dans la plage prédéterminée.

8. Procédé selon l'une quelconque des revendications 1 à 7, dans lequel le procédé comprend une étape de conversion d'un signal de mesure analogique en un signal de mesure numérique au moyen d'un convertisseur analogique-numérique.

9. Procédé selon la revendication 8, dans lequel le procédé comprend une étape de reconversion du signal de mesure numérique converti en un signal de mesure analogique reconverti, au moyen d'un convertisseur numérique-analogique (14) lorsque le signal de mesure doit être fourni de manière analogique à l'appareil (2).

10. Capteur, en particulier capteur de gaz optique (1),
comprenant une couche de détection (8), une source de rayonnement (6), un détecteur de rayonnement (10) et un microcontrôleur (4),
**caractérisé en ce que** le microcontrôleur (4) est conçu pour commander et/ou mettre en œuvre un procédé selon l'une quelconque des revendications 1 à 9.

11. Capteur, en particulier capteur de gaz optique (1), selon la revendication 10, comprenant une, plusieurs ou toutes les caractéristiques ci-dessous :
une batterie (12) permettant d'alimenter en énergie électrique le capteur, en particulier le capteur de gaz optique (1) ;
un convertisseur analogique-numérique permettant de convertir un signal de mesure analogique en un signal de mesure numérique ;
un convertisseur numérique-analogique (14) permettant de reconvertir un signal de mesure analogique, converti en un signal de mesure numérique au moyen d'un convertisseur analogique-numérique, en un signal de mesure analogique reconverti, lorsque le signal de mesure doit être fourni de manière analogique à l'appareil (2) ;
un circuit (13) permettant de mesurer une résistance au niveau d'un raccordement du capteur, en particulier du capteur optique de gaz (1) ;
au moins une interface numérique (15, 16) permettant de fournir un signal de capteur numérique, en particulier une interface numérique de niveau de tension (16) permettant de fournir le signal de capteur numérique sous forme de niveau de tension et/ou une interface numérique de niveau d'intensité (15) permettant de fournir le signal de capteur numérique sous forme de niveau d'intensité ;
un dispositif de mesure de tension permettant de mesurer une tension au niveau d'un raccordement du capteur, en particulier du capteur de gaz optique (1), en particulier réalisé au moyen d'un convertisseur analogique-numérique (21).

12. Agencement, présentant :
un capteur, en particulier un capteur de gaz optique (1), selon la revendication 10 ou 11 ; et
un appareil (2) auquel le capteur, en particulier le capteur de gaz optique, (1) est connecté ou peut être connecté.

13. Agencement selon la revendication 12, présentant au moins une des caractéristiques ci-dessous :
un connecteur enfichable (3), en particulier un connecteur enfichable bipolaire, permettant de connecter le capteur, en particulier le capteur de gaz optique (1), à l'appareil (2) ;
dans lequel l'appareil (2) présente ou se compose d'un équipement de plongée, en particulier d'un appareil de plongée formant recycleur.
